# EUROPÄISCHE PATENTANMELDUNG

(11) **EP 3 141 350 A1**
(43) Veröffentlichungstag der Anmeldung: **15.03.2017**
(21) Anmeldenummer: 16179145.4
(22) Anmeldetag: 13.07.2016
(51) Int. Cl.: B25F 5/00

(54) **WERKERFÜHRUNG DIREKT AUF ANZEIGE DISPLAY DES WERKZEUGS**

(30) Priorität: 18.08.2015 DE 102015215666
(71) Anmelder: ROBERT BOSCH GMBH, 70442 Stuttgart (DE)
(72) Erfinder: Kroetz, Andreas, 71560 Sulzbach/Murr (DE)
(74) Vertreter: Thürer, Andreas

(57) **Zusammenfassung**

Die Erfindung betrifft ein Werkzeug (1), insbesondere Elektrowerkzeug (1), welches eine Anzeigeeinrichtung (10) sowie Mittel (30) zum Empfang und zur Auswertung von übermittelten Daten, aufweist. Erfindungsgemäß ist das Werkzeug (1) dazu geeignet und fähig, basierend auf den dem Werkzeug übermittelten Daten auf der Anzeigeeinrichtung (10) wenigstens eine Information anzuzeigen, die wenigstens einen, insbesondere mit dem Werkzeug (1), vorzunehmenden Arbeitsschritt betrifft oder repräsentiert.

## Beschreibung

Die vorliegende Erfindung betrifft ein Werkzeug, insbesondere ein Elektrowerkzeug, welches eine Anzeigeeinrichtung sowie Mittel zum Empfang und zur Auswertung von übermittelten Daten, aufweist.

Aus Fertigungsanlagen wie aus der Automobilindustrie sind beispielsweise bei der Montage komplexer, mehrteiliger Fertigungsprodukte zahlreiche Arbeitsaufträge bekannt, die jeweils für die beauftragten Werker das sequentielle Durchführen mehrerer Arbeitsschritte mittels einem oder auch verschiedener Werkzeuge erfordern.

Zur Führung der Werker ist aus dem Stand der Technik die Verwendung eines separaten Displays bzw. eines separaten lokalen Computers vorgesehen, auf dem die nacheinander auszuführenden, oftmals typ- bzw. modellspezifisch variierenden Arbeitsschritte und/oder diesen betreffende Arbeitsparameter angezeigt werden. Zur Werkerführung muss daher der Werker auf ein extra Display schauen, um den nächsten Arbeitsschritt durchzuführen.

Allerdings ist das Display bzw. die stationäre Anlage oder Steuerung ortsgebunden. Wenn also der Werker beispielsweise im, am oder unter dem zu fertigenden Gegenstand wie einem Fahrzeug oder etwa einem Motor arbeitet, ist das Display bzw. der Bildschirm des Computers gegebenenfalls von diesem Standpunkt aus nicht mehr sichtbar, weil es sich nicht direkt bei dem Werker befindet.

Der vorliegenden Erfindung liegt daher die Aufgabe zugrunde, dem Werker zu jedem Schritt in jeder Arbeitsumgebung die entsprechende Information/Führung bereitzustellen. Mit anderen Worten soll einem Bediener eines Werkzeugs, mit dem ein Arbeitsschritt durchzuführen ist, wenigstens eine Information bezüglich des vorzunehmenden Arbeitsschrittes mittels einer mobilen Anzeigeeinrichtung in möglichst Kosten- und Ressourcen-sparender Art und Weise zur Verfügung gestellt werden.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Ein erfindungsgemäßes Werkzeug, bevorzugt industrielles Werkzeug und insbesondere Elektrowerkzeug, weist eine Anzeigeeinrichtung sowie Mittel zum Empfang und zur Auswertung von übermittelten Daten auf.

Erfindungsgemäß ist das Werkzeug dazu geeignet und fähig, basierend auf den dem Werkzeug übermittelten Daten auf der Anzeigeeinrichtung wenigstens eine Information anzuzeigen, die wenigstens einen, insbesondere mit dem Werkzeug, vorzunehmenden Arbeitsschritt betrifft oder repräsentiert.

Bevorzugt handelt es sich bei dem Werkzeug um ein industrielles und elektrisch angetriebenes Werkzeug insbesondere für den mobilen Einsatz, vorteilhaft um ein handgeführtes und bevorzugt tragbares Werkzeug, welches besonders vorteilhaft akkubetrieben ist. Bevorzugt weist das Werkzeug einen Werkzeugkopf zum Bearbeiten eines Werkstücks auf.

Bevorzugt ist die Anzeigeeinrichtung eine graphische Anzeigeeinrichtung und/oder zur Textausgabe geeignet. Bevorzugt ist die Anzeigeeinrichtung in ein Gehäuse des Werkzeugs integriert. Bevorzugt ist die Anzeigeeinrichtung als Touchscreen ausgebildet und kann ebenfalls als Eingabeeinrichtung dienen. Denkbar ist allerdings nicht nur eine visuelle Anzeigeeinrichtung sondern ebenfalls eine akustische Anzeigeeinrichtung. Allgemein kann daher die Anzeigeeinrichtung als Informationsausgabeeinrichtung aufgefasst werden.

Unter dem Werkzeug übermittelten Daten sind bevorzugt alle dem Werkzeug extern zugeführten Daten, Informationen und/oder Eingaben zu verstehen. Eine solche Übermittlung von Daten kann beispielsweise mittels im Werkzeug integrierten Tasten, eines integrierten Touchdisplays, über eine Schnittstelle zur Datenkommunikation mit einem weiteren elektronischen Gerät wie einem Rechner oder aber über ein in dem Werkzeug integriertes Funkmodul zum Empfang von gesendeten Daten erfolgen.

Als Mittel zum Empfang und zur Auswertung von übermittelten Daten können folglich beispielsweise etwa Tastsensoren und/oder Berührungssensoren und/oder etwaige Schnittstellen und/oder ein Funkmodul in Kombination mit einer Prozessoreinrichtung zur Auswertung der Daten vorgesehen sein.

Es wird daher vorgeschlagen, dass der Werker die entsprechende Arbeitsanweisung bekommt, in der er beispielsweise den Auftrag erhält die "Nuss 1" zu wechseln, und/oder das entsprechende Bild beispielsweise von der zu bearbeitenden Schraubstelle direkt auf dem Display des Werkzeugs angezeigt wird. Durch die unmittelbare Anzeige des nächsten vorzunehmenden Arbeitsschrittes direkt an dem Werkzeug wird dem Bedienenden auch ohne Sichtkontakt zu einem (fest installierten) Bildschirm die Erfassung des nächsten Arbeitsschrittes bzw. hierbei zu berücksichtigende Arbeitsparameter ermöglicht.

Damit kann zum einen eine bessere Prozesssicherheit gewährleistet werden, als dem Bedienenden alle nötigen Arbeitsparameter direkt am Einsatzort bereitgestellt werden können, und zum anderen eine Kosteneinsparung für den extra Rechner oder Display, durch den bzw. das ansonsten die Werkerführung realisiert wird, ermöglicht.

Damit weist das erfindungsgemäße Werkzeug bevorzugt eine Werkerführungseinrichtung auf, die dazu geeignet und bestimmt ist, dem Bedienenden auf den nächsten vorzunehmenden Arbeitsschritt bezogene Instruktionen zu vermitteln.

Bevorzugt betreffen die dem Werkzeug übermittelten Daten wenigstens einen durchzuführenden, besonders bevorzugt den nächsten mit dem Werkzeug durchzuführenden Arbeitsschritt. Bevorzugt betreffen die dem Werkzeug übermittelten Daten einen aus mehreren (nacheinander durchzuführenden) Arbeitsschritten bestehenden Arbeitsprozess, von denen wenigstens einer und bevorzugt alle mit diesem Werkzeug durchzuführen ist bzw. sind. Dabei kann der Arbeitsprozess auch wenigstens einen Arbeitsschritt umfassen, der mit einem weiteren Werkzeug durchzuführen ist.

Bevorzugt weist das Werkzeug eine Speichereinrichtung auf, in der mindestens ein Arbeitsschritt und bevorzugt eine Abfolge an Arbeitsschritten speicherbar ist. Mittels einer dem Werkzeug übermittelten Information ist bevorzugt eine in der Speichereinrichtung gespeicherte Abfolge an Arbeitsschritten aktivierbar, so dass wenigstens der nächste vorzunehmende Schritt auf der Anzeigeeinrichtung angezeigt wird und besonders vorteilhaft nacheinander alle Arbeitsschritte nacheinander auf der Anzeigeeinrichtung angezeigt werden. Damit ist vorteilhaft das Werkzeug dazu geeignet und fähig autonom, also auch in einer Arbeitsumgebung in der keine Verbindung zu bzw. Kommunikation mit einem externen Gerät möglich ist, wenigstens einen nächsten und bevorzugt mehrere weitere vorzunehmende Arbeitsschritte anzuzeigen.

Bevorzugt können die dem Gerät übermittelten Daten und/oder kann die wenigstens eine auf der Anzeigeeinrichtung angezeigte Information auch eine Terminierung oder eine Abänderung eines ursprünglich geplanten Arbeitsschrittes betreffen.

In einer vorteilhaften Ausführungsform ist das Werkzeug mit einem Datennetzwerk verbindbar und die Mittel zum Empfang und zur Auswertung von übermittelten Daten sind zum Empfang und zur Auswertung von über das Datennetzwerk übermittelten Daten geeignet.

Bevorzugt ist hierzu ein Funknetzwerk vorgesehen, es kann aber auch ein kabelgebundenes Netzwerk vorgesehen sein. Bevorzugt können über das Datennetzwerk via Open Protokoll Nachrichten dem Werkzeug Daten übermittelt werden.

Bevorzugt ist das Werkzeug über das Datennetzwerk mit einer externen und bevorzugt von dem Werkzeug beabstandet angeordneten Steuerungseinrichtung verbindbar. Bevorzugt ist in dieser Steuerungseinrichtung eine Abfolge an Arbeitsschritten bzw. ein programmierter Job abgelegt, der einen den zu bearbeitenden Gegenstand betreffenden Arbeitsauftrag betrifft. Bevorzugt ist diese Steuerungseinrichtung mit mindestens einem weiteren Werkzeug verbunden bzw. verbindbar. Bevorzugt ist damit das Werkzeug in ein System integrierbar, in dem zumindest mehrere und bevorzugt alle den mit dem Werkzeug zu bearbeitenden Gegenstand betreffenden Arbeitsschritte speicherbar und/oder überwachbar und/oder steuerbar sind. So werden bevorzugt die Graphikausgaben bzw. die Textausgaben auf dem Display des Werkzeugs direkt in dem System integriert und können z.B. über einem in dem System programmierten Job oder Programm situationsbedingt direkt angesteuert und/oder ausgegeben werden.

In einer weiteren vorteilhaften Ausführungsform weist das Werkzeug eine Eingabeeinrichtung zum Eingeben von (Steuer-)Befehlen/Daten auf und ist dazu geeignet und fähig, in Reaktion auf eine über die Eingabeeinrichtung vorgenommene Eingabe auf der Anzeigeeinrichtung die wenigstens eine Information anzuzeigen, die den wenigstens einen, insbesondere mit dem Werkzeug, vorzunehmenden Arbeitsschritt betrifft oder repräsentiert. Hierfür kann als Eingabeeinrichtung beispielsweise ein Touchscreen oder können auch andere Bedienelemente wie wenigstens eine in dem Gerät integrierte Taste vorgesehen sein.

Aus der Eingabe ist bevorzugt durch das Werkzeug bzw. dessen Prozessoreinrichtung eine Quittierung eines bereits vorgenommenen Arbeitsschrittes und/oder vorteilhaft eine Anzeigeinstruktion des nächsten mit dem Werkzeug durchzuführenden Arbeitsschrittes und/oder vorteilhaft der Start eines auf dem Werkzeug gespeicherten Programm zur (automatischen) Anzeige aufeinanderfolgender vorzunehmender Arbeitsschritte ableitbar. Des Weiteren ist denkbar, dass aus der Eingabe durch das Werkzeug bzw. durch dessen Prozessoreinrichtung ableitbar ist, ein Signal an eine über das Datennetzwerk verbundene Steuereinrichtung zu senden und somit die Übermittlung von Daten anzufordern, die den nächsten vorzunehmenden Arbeitsschritt betreffen.

In einer weiteren vorteilhaften Ausführungsform betrifft die wenigstens eine Information eine Aufforderung zur Quittierung des vorzunehmenden Arbeitsschrittes.

In einer weiteren vorteilhaften Ausführungsform repräsentiert die wenigstens eine Information wenigstens eine Art des vorzunehmenden Arbeitsschritts. Beispielsweise kann dabei der Arbeitsauftrag übermittelt werden, dass mit dem Werkzeug eine Schraube oder eine Mutter angezogen werden soll.

Bevorzugt repräsentiert die Information alternativ oder zusätzlich die für den vorzunehmenden Arbeitsschritt benötigten Arbeitsmittel bzw. anzubringende oder zu wechselnde Werkzeugaufsätze des Werkzeugs sowie gegebenenfalls Maße (etwa eine Schraubengröße) und Materialien derselben. Bevorzugt umfasst die auf der Anzeigeeinrichtung angezeigte Information auch den vorzunehmenden Arbeitsschritt weiter spezifizierende Parameter wie etwa die Angabe eines definierten Anzugsmomentes.

In einer weiteren vorteilhaften Ausführungsform repräsentiert die Information alternativ oder zusätzlich wenigstens eine vorgegebene angesetzte Zeitdauer des vorzunehmenden Arbeitsschritts. Bevorzugt kann nach Ablauf dieser Zeitdauer automatisch auf der Anzeigeeinrichtung die Anzeige eines nachfolgenden Arbeitsschrittes erfolgen.

Bevorzugt umfasst die auf der Anzeigeeinrichtung angezeigte Information alternativ oder zusätzlich eine genaue Positionsangabe der Stelle des zu bearbeitenden Gegenstandes, bevorzugt mittels der bildlichen Darstellung wenigstens eines Ausschnitts des zu bearbeitenden Gegenstandes, in der die entsprechende Stelle gekennzeichnet ist.

Bevorzugt ist die wenigstens eine auf der Anzeigeeinrichtung des Werkzeugs angezeigte Information werkzeugbezogen in dem Sinne, dass sie den nächsten mit diesem Werkzeug vorzunehmenden Arbeitsschritt anzeigt. Bevorzugt kann die wenigstens eine auf der Anzeigeeinrichtung angezeigte Information zusätzlich oder alternativ auch Bedienenden-bezogen in dem Sinne sein, dass dem das Werkzeug Bedienenden auch ein mit einem weiteren Werkzeug vorzunehmender nächster Arbeitsschritt angezeigt werden kann.

In einer weiteren vorteilhaften Ausführungsform ist das Werkzeug zur Verrichtung eines Arbeitsschrittes geeignet, der wenigstens einem der Arbeitsgebiete Schraubtechnik, Schweißtechnik, Niettechnik, Bohrtechnik, Messtechnik oder Löttechnik entnommen ist.

Bevorzugt kann es sich dabei um ein handgeführtes Schraub- oder Bohrwerkzeug bzw. um ein Werkzeug handeln, das zur Montage eines Gegenstandes verwendet wird.

In einer weiteren vorteilhaften Ausführungsform weist das Werkzeug mindestens eine Sensoreinrichtung zur Erfassung von Sensordaten während seines Betriebs, die für wenigstens einen betriebsbezogenen Parameter des Werkzeugs charakteristisch sind, sowie eine Prozessoreinrichtung auf und ist dazu geeignet und fähig, aus, bevorzugt über ein Datennetzwerk, dem Werkzeug bereitgestellten bzw. übermittelten Daten, aus denen mindestens zwei nacheinander mit dem Werkzeug vorzunehmende Arbeitsschritte betreffende Informationen ableitbar sind, mindestens eine den ersten vorzunehmenden Arbeitsschritt betreffende Information abzuleiten und auf der Anzeigeeinrichtung anzuzeigen. Dies bedeutet bevorzugt, dass für die Ausgabe auch Messwerte herangezogen werden.

Bevorzugt ist das Werkzeug weiterhin dazu geeignet und fähig, während der Vornahme des ersten Arbeitsschritts mittels der mindestens einen Sensoreinrichtung Sensordaten zu erfassen, die für wenigstens einen betriebsbezogenen Parameter des Werkzeugs charakteristisch sind, und die Prozessoreinrichtung ist dazu geeignet und fähig, in Abhängigkeit dieser Sensordaten (und bevorzugt basierend auf den übermittelten Daten) weitere Daten bereitzustellen, aus denen wenigstens eine den weiteren (nachfolgend) vorzunehmenden Arbeitsschritt betreffende Information ableitbar ist, und auf der Anzeigeeinrichtung wenigstens eine den weiteren vorzunehmenden Arbeitsschritt betreffende Information anzuzeigen.

Damit ist in einer bevorzugten Ausführungsform die Prozessoreinrichtung dazu geeignet und fähig, zu bewerten, ob ein erster Arbeitsschritt durchgeführt wurde. Kommt die Prozessoreinrichtung zu der Bewertung, dass der erste Arbeitsschritt bereits vorgenommen wurde bzw. abgeschlossen ist, ist sie bevorzugt dazu fähig und geeignet, die Anzeige des nächsten darauf folgenden Arbeitsschrittes zu veranlassen.

Bevorzugt kann die Bereitstellung der weiteren Daten werkzeugintern als auch vorteilhaft unter wenigstens teilweiser Miteinbeziehung von externen und bevorzugt über das Datennetzwerk bereitgestellten Daten erfolgen. In letzterem Fall kann beispielsweise die Prozessoreinrichtung dazu geeignet und fähig sein, die Übermittlung der Sensordaten an eine Steuereinrichtung und eine daran anschließende Bereitstellung der weiteren Daten von der Steuereinrichtung zu veranlassen. In beiden Fällen ist folglich bevorzugt ein intelligentes System beschrieben, das ohne weitere Eingabe (wie einer manuellen Quittierung eines Arbeitsschrittes) beurteilen kann, wann ein nächster bzw. weiterer Arbeitsschritt angezeigt werden soll.

Die vorliegende Erfindung ist weiterhin auf gerichtet auf ein System aus einem mit einem Datennetzwerk verbindbaren, eine Anzeigeeinrichtung aufweisenden Werkzeug, insbesondere ein Elektrowerkzeug, sowie aus Mitteln zur Übertragung von Daten über das Datennetzwerk an das Werkzeug. Dabei kann dieses System mit allen in der Beschreibung, im Kontext mit dem Werkzeug beschriebenen Merkmalen bzw. allen möglichen Kombinationen hieraus ausgestattet sein.

Bevorzugt weisen die Mittel zur Übertragung von Daten über das Datennetzwerk wenigstens eine Steuerungseinrichtung auf, die beispielsweise mit den obig beschriebenen Merkmalen ausgestattet sein kann. Ein derartiges Mittel zur Übertragung von Daten über das Datennetzwerk kann durch einen Rechner gegeben sein.

Bevorzugt ist die Steuerungseinrichtung mit wenigstens einem weiteren Werkzeug und besonders bevorzugt mit allen Werkzeugen verbunden, das bzw. die im Rahmen eines an dem zu bearbeitenden Gegenstands vorzunehmenden Arbeitsvorgangs zur Vornahme wenigstens eines Arbeitsschrittes vorgesehen ist bzw. sind. So können bevorzugt die Ausgaben auf der Anzeigeeinrichtung eines jeden Werkzeugs bevorzugt zentral von der Steuerungseinrichtung gesteuert und/oder überwacht werden. Damit sind bevorzugt die Ausgaben auf dem Display direkt in einem System integriert und können z.B. über einem in dem System programmierten Job oder Programm situationsbedingt direkt angesteuert und/oder ausgegeben werden.

Erfindungsgemäß ist das Werkzeug dazu geeignet und fähig, basierend auf durch die Mittel zur Übertragung von Daten an das Werkzeug übermittelten Daten auf der Anzeigeeinrichtung wenigstens eine Information anzuzeigen, die wenigstens einen, insbesondere mit dem Werkzeug, vorzunehmenden Arbeitsschritt betrifft oder repräsentiert.

Die vorliegende Erfindung ist weiterhin gerichtet auf ein Verfahren zur Führung des Benutzers eines eine Anzeigeeinrichtung aufweisenden Werkzeugs, insbesondere eines Elektrowerkzeugs, bei der Vornahme mindestens eines Arbeitsschrittes mit diesem Werkzeug insbesondere an einem Werkobjekt, wobei dem Werkzeug in einem ersten Schritt Daten bereitgestellt werden, aus denen wenigstens eine den vorzunehmenden Arbeitsschritt betreffende Information ableitbar ist, und in einem weiteren Schritt auf der Anzeigeeinrichtung wenigstens eine den vorzunehmenden Arbeitsschritt betreffende Information angezeigt wird.

Dabei kann das Verfahren mit allen in der Beschreibung, im Kontext mit dem Werkzeug beschriebenen Merkmalen bzw. allen möglichen Kombinationen hieraus und davon abgeleiteten sinngemäßen Verfahrensschritten ausgestattet sein.

In einer vorteilhaften Ausführungsform werden dem Werkzeug, das mit einem Datennetzwerk verbindbar ist, in dem ersten Schritt Daten über ein Datennetzwerk bereitgestellt.

Bevorzugt wird als den vorzunehmenden Arbeitsschritt betreffende Information eine Aufforderung zur Quittierung des vorgenommenen Arbeitsschrittes auf der Anzeigeeinrichtung angezeigt.

Bevorzugt werden während der Vornahme eines Arbeitsschrittes mittels mindestens einer Sensoreinrichtung des Werkzeugs Sensordaten erfasst, die für wenigstens einen betriebsbezogenen Parameter des Werkzeugs charakteristisch sind, und bevorzugt werden in Abhängigkeit dieser Sensordaten dem Werkzeug weitere Daten bereitgestellt, aus denen wenigstens eine einen weiteren vorzunehmender Arbeitsschritt betreffende Information ableitbar ist, und bevorzugt wird auf der Anzeigeeinrichtung wenigstens eine den weiteren vorzunehmenden Arbeitsschritt betreffende Information angezeigt.

Bevorzugt werden dem Werkzeug in einem ersten Schritt Daten bereitgestellt, aus denen Informationen ableitbar sind, die eine Abfolge von wenigstens zweien, bevorzugt mehreren und besonders bevorzugt allen innerhalb eines vollständigen Arbeitsprozesses mit diesem Werkzeug vorzunehmenden Arbeitsschritten betreffen.

Die vorliegende Erfindung ist weiterhin gerichtet auf eine Verwendung eines eine Anzeigeeinrichtung aufweisenden Werkzeugs, bevorzugt eines industriellen Werkzeugs und insbesondere eines Elektrowerkzeugs, zum Anzeigen wenigstens einer Information, die wenigstens einen, insbesondere mit dem Werkzeug, vorzunehmenden Arbeitsschritt betrifft oder repräsentiert. Dabei kann dieses Werkzeug selbstverständlich ebenfalls mit allen in der Beschreibung, im Kontext mit dem Werkzeug beschriebenen Merkmalen bzw. allen möglichen Kombinationen hieraus ausgestattet sein.

Weitere Vorteile und Ausführungsformen ergeben sich aus der beigefügten Zeichnung. Darin zeigt:
- Fig. 1: Eine schematische Darstellung einer Ausführungsform eines erfindungsgemäßen Werkzeugs verbunden mit Mitteln zur Übertragung von Daten;
- Fig. 2: eine Darstellung einer Anzeigeeinrichtung eines erfindungsgemäßen Werkzeugs.

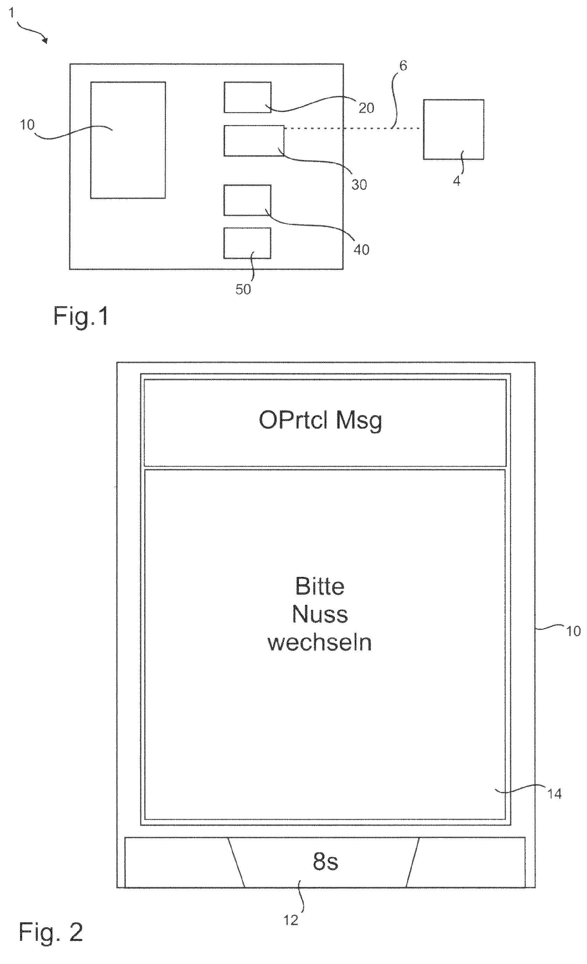

In Fig. 1 wird eine Ausführungsform eines erfindungsgemäßen Werkzeugs 1 schematisch dargestellt. Ein solches weist eine Anzeigeeinrichtung 10 auf, über die erfindungsgemäß insbesondere dem Bedienenden der nächste vorzunehmende Arbeitsschritt bzw. diesbezügliche Informationen hierüber angezeigt wird. Es sind Mittel 30 zum Empfang und zur Auswertung von übermittelten Daten vorgesehen, über die dem Werkzeug 1 Daten bereitgestellt bzw. übermittelt werden können, die einen vorzunehmenden Arbeitsschritt betreffen. Hierzu ist es möglich, dass das Werkzeug 1 über ein Datennetzwerk 6 mit Mitteln 4 zur Übertragung von Daten über das Datennetzwerk 6 an das Werkzeug 1 bzw. einer Steuereinrichtung 4 verbunden ist und diese dem Werkzeug 1 die erforderlichen Daten übermitteln.

Des Weiteren kann zusätzlich eine Eingabeeinrichtung 50 vorgesehen sein, beispielsweise wenigstens eine in dem Gerät integrierte Taste, mithilfe derer ein bereits vorgenommener Arbeitsschritt quittiert werden kann bzw. mithilfe derer dem Werkzeug 1 von dem Bedienenden die Anzeige des nächsten Arbeitsschrittes bzw. der Start einer sequentiellen Anzeige mehrerer aufeinanderfolgender Arbeitsschritte initiiert werden kann.

Darüber hinaus kann das Werkzeug 1 wenigstens eine Sensoreinrichtung 20 aufweisen, die wenigstens einen und bevorzugt mehrere Sensordaten, die charakteristisch sind für betriebsbezogene Parameter des Werkzeugs 1 während seines Betriebs, erfasst. Mittels einer Prozessoreinrichtung 40 können diese erfassten Sensordaten ausgewertet werden und bevorzugt beurteilt werden, ob die Vornahme eines geplanten (und in der Anzeigeeinrichtung 10 angezeigten) vorzunehmenden Arbeitsschrittes bereits erfolgt ist. Gegebenenfalls kann dann die Prozessoreinrichtung 40 die Anzeige eines etwaigen weiteren Arbeitsschrittes auf der Anzeigeeinrichtung 10 initiieren.

Fig. 2 zeigt eine Ausführungsform einer Anzeigeeinrichtung 10 eines erfindungsgemäßen Werkzeugs 1. Dieses kann beispielsweise in einem ersten Bereich 14 der Anzeigeeinrichtung 10 eine Art bzw. einen Typ des vorzunehmenden Arbeitsschrittes anzeigen. In einem zweiten Bereich 12 der Anzeigeeinrichtung 10 kann eine hierfür veranschlagte (vorgegebene) Zeitdauer, beispielsweise 8 s, angezeigt werden. Nach Ablauf dieser Zeitdauer kann beispielsweise auf der Anzeigeeinrichtung 10 ein nachfolgender Arbeitsschritt angezeigt werden.

### Bezugszeichenliste:

- 1: Werkzeug
- 4: Mitteln zur Übertragung von Daten über das Datennetzwerk an das Werkzeug bzw. Steuereinrichtung
- 6: Datennetzwerk
- 10: Anzeigeeinrichtung
- 12: zweiter Bereich
- 14: erster Bereich
- 20: Sensoreinrichtung
- 30: Mittel zum Empfang und zur Auswertung von über das Datennetzwerk übermittelten Datensignalen
- 40: Prozessoreinrichtung
- 50: Eingabeeinrichtung

## Patentansprüche

1. Werkzeug (1), insbesondere Elektrowerkzeug (1), welches eine Anzeigeeinrichtung (10) sowie Mittel (30) zum Empfang und zur Auswertung von übermittelten Daten, aufweist, **dadurch gekennzeichnet, dass** das Werkzeug (1) dazu geeignet und fähig ist, basierend auf den dem Werkzeug übermittelten Daten auf der Anzeigeeinrichtung (10) wenigstens eine Information anzuzeigen, die wenigstens einen, insbesondere mit dem Werkzeug (1), vorzunehmenden Arbeitsschritt betrifft oder repräsentiert.

2. Werkzeug (1) gemäß Anspruch 1, **dadurch gekennzeichnet, dass** es mit einem Datennetzwerk verbindbar ist und die Mittel (30) zum Empfang und zur Auswertung von übermittelten Daten zum Empfang und zur Auswertung von über das Datennetzwerk übermittelten Daten geeignet sind.

3. Werkzeug (1) gemäß wenigstens einem der vorhergehenden Ansprüche,
**dadurch gekennzeichnet, dass** es eine Eingabeeinrichtung (50) zum Eingeben von Daten aufweist und das Werkzeug (1) dazu geeignet und fähig ist, in Reaktion auf eine über die Eingabeeinrichtung vorgenommene Eingabe auf der Anzeigeeinrichtung (10) die wenigstens eine Information anzuzeigen, die den wenigstens einen, insbesondere mit dem Werkzeug (1), vorzunehmenden Arbeitsschritt betrifft oder repräsentiert.

4. Werkzeug (1) gemäß wenigstens einem der vorhergehenden Ansprüche,
**dadurch gekennzeichnet, dass** die wenigstens eine Information eine Aufforderung zur Quittierung des vorzunehmenden Arbeitsschrittes betrifft.

5. Werkzeug (1) gemäß wenigstens einem der vorhergehenden Ansprüche,
**dadurch gekennzeichnet, dass** die wenigstens eine Information wenigstens eine Art und/oder wenigstens eine vorgegebene angesetzte Zeitdauer des vorzunehmenden Arbeitsschritts repräsentiert.

6. Werkzeug (1) gemäß wenigstens einem der vorhergehenden Ansprüche,
**dadurch gekennzeichnet, dass** es zur Verrichtung eines Arbeitsschrittes geeignet ist, der wenigstens einem der Arbeitsgebiete Schraubtechnik, Schweißtechnik, Niettechnik, Bohrtechnik, Messtechnik oder Löttechnik entnommen ist.

7. Werkzeug (1) gemäß wenigstens einem der vorhergehenden Ansprüche, **dadurch gekennzeichnet, dass** das Werkzeug mindestens eine Sensoreinrichtung (20) zur Erfassung von Sensordaten während seines Betriebs, die für wenigstens einen betriebsbezogenen Parameter des Werkzeugs (1) charakteristisch sind, sowie eine Prozessoreinrichtung (40) aufweist und es dazu geeignet und fähig ist, aus dem Werkzeug (1) bereitgestellten bzw. übermittelten Daten, aus denen mindestens zwei nacheinander mit dem Werkzeug (1) vorzunehmende Arbeitsschritte betreffende Informationen ableitbar sind, mindestens eine den ersten vorzunehmenden Arbeitsschritt betreffende Information abzuleiten und auf der Anzeigeeinrichtung (10) anzuzeigen, das Werkzeug (1) weiterhin dazu geeignet und fähig ist, während der Vornahme des ersten Arbeitsschritts mittels der mindestens einen Sensoreinrichtung (20) Sensordaten zu erfassen, die für wenigstens einen betriebsbezogenen Parameter des Werkzeugs (1) charakteristisch sind, und die Prozessoreinrichtung (40) dazu geeignet und fähig ist, in Abhängigkeit dieser Sensordaten weitere Daten bereitzustellen, aus denen wenigstens eine den weiteren vorzunehmenden Arbeitsschritt betreffende Information ableitbar ist, und auf der Anzeigeeinrichtung (10) wenigstens eine den weiteren vorzunehmenden Arbeitsschritt betreffende Information angezeigt wird.

8. System aus einem mit einem Datennetzwerk verbindbaren, eine Anzeigeeinrichtung (10) aufweisenden Werkzeug (1), insbesondere ein Elektrowerkzeug (1), sowie aus Mitteln (4) zur Übertragung von Daten über das Datennetzwerk an das Werkzeug (1), **dadurch gekennzeichnet, dass** das Werkzeug (1) dazu geeignet und fähig ist, basierend auf durch die Mittel zur Übertragung von Daten an das Werkzeug übermittelten Daten auf der Anzeigeeinrichtung (10) wenigstens eine Information anzuzeigen, die wenigstens einen, insbesondere mit dem Werkzeug (1), vorzunehmenden Arbeitsschritt betrifft oder repräsentiert.

9. Verfahren zur Führung des Benutzers eines eine Anzeigeeinrichtung (10) aufweisenden Werkzeugs (1), insbesondere eines Elektrowerkzeugs (1), bei der Vornahme mindestens eines Arbeitsschrittes mit diesem Werkzeug (1) insbesondere an einem Werkobjekt, wobei dem Werkzeug (1) in einem ersten Schritt Daten bereitgestellt werden, aus denen wenigstens eine den vorzunehmenden Arbeitsschritt betreffende Information ableitbar ist, und in einem weiteren Schritt auf der Anzeigeeinrichtung (10) wenigstens eine den vorzunehmenden Arbeitsschritt betreffende Information angezeigt wird.

10. Verwendung eines eine Anzeigeeinrichtung (10) aufweisenden Werkzeugs (1), insbesondere eines Elektrowerkzeugs (1), zum Anzeigen wenigstens einer Information, die wenigstens einen, insbesondere mit dem Werkzeug (1), vorzunehmenden Arbeitsschritt betrifft oder repräsentiert.
